# EUROPEAN PATENT APPLICATION

(11) **EP 1 304 859 A2**
(43) Date of publication of application: **23.04.2003**
(21) Application number: 02017232.6
(22) Date of filing: 31.07.2002
(51) Int. Cl.: H04N 1/00

(54) **Terminal apparatus and method for radio communication**

(30) Priority: 16.10.2001 JP 2001318221
(71) Applicant: Kabushiki Kaisha Toshiba, Tokyo (JP)
(72) Inventor: Tsuchiya, Daijiro, 1-chome, Minato-ku, Tokyo 105-8001 (JP)
(74) Representative: Henkel, Feiler, Hänzel

(57) **Abstract**

A radio communication terminal apparatus has a microphone (8) which outputs voice data on receiving voice input, a camera (12) which capture a picture and outputs picture data, a GPS receiving unit (4) which determines a position and outputs position data, a memory (10) which stores at least the voice data, the picture data, and the position data, a radio unit (3) which transmits and receives the position data with the voice data and the picture data attached, and a display unit (13) which a picture according to the received picture data together with position information according to the position data, through which information on positions of the user's communication partner and the user can be confirmed by displaying the position information together with a motion picture during TV telephone communication.

## Description

The present invention relates to a radio communication terminal apparatus etc., for example, a mobile telephone.

In particular, the invention relates to a radio communication terminal apparatus and radio communication method that has a camera function and a position determination function, through which information on the positions of a user's communication partner and the user oneself can be confirmed on a display screen during TV telephone communication or at the time of confirming a reception history and a transmission history.

In general, a radio communication terminal apparatus such as a PHS (Personal Handy-phone System) or a PDC (Personal Digital Cellular) has been distributed widely. The PHS or PDC comprises a function through which various data communication including voice data communication can be realized. With the introduction of techniques such as CDMA (Code Division Multiple Access) in particular, recently, higher speed data communication has been realized.

In addition, with a radio communication terminal apparatus equipped with a camera, motion picture data communication or TV telephone communication can be performed. Further, with a radio communication terminal apparatus equipped with a GPS (Global Positioning System) that is a means for determining position information, a predetermined map can be displayed.

In the case that TV telephone communication is performed through the radio communication terminal apparatus equipped with a camera according to the aforementioned prior art, it is possible to transmit and receive, and store motion picture data.

However, according to the prior art, it is not performed to transmit or receive, or store position data on a sender or receiver together with the relevant motion picture data. Accordingly, it is not possible to confirm the position information on a user oneself and a user's communication party on a screen of an apparatus during TV telephone communication.

Further, the aforementioned radio communication terminal apparatus according to the prior art comprises a function for storing a transmission history or a reception history. However, only telephone number data and time data are stored as the history data, and thus the position of the radio communication terminal apparatus at the time of transmission or reception, that is, the place where transmission is performed and the place where reception is performed cannot be confirmed later.

Furthermore, in the radio communication terminal apparatus equipped with the aforementioned GPS, map information used for displaying a predetermined map is stored in a memory in advance. However, the quantity of the information is huge, and therefore, a memory of large capacity is required, which has been desired to be improved on.

The present invention has been developed to resolve the above problems, and an object thereof is to provide a radio communication terminal apparatus and a radio communication method, which comprise a function for storing motion picture data to be transmitted or received with position data added thereto and displaying it, and are capable of associating picture data and position data with transmission and reception history data, storing the associated data, and displaying the same.

To achieve the above object, a radio communication terminal apparatus according to a first aspect of the invention comprises a voice input unit which outputs voice data on receiving voice input, a position determination unit which determines a position and outputs position data, a storage unit which stores at least one of the voice data and the position data, a communication unit which transmits and receives the voice data and the position data, and a display unit which displays position information according to the position data.

In a radio communication terminal apparatus according to a second aspect of the invention comprises a communication unit to receive at least a data on a transmitting side, the data including at least one of voice data and position data, a position determination unit which determines a position, when the communication unit received the data, and outputs the position data on the receiving side, a storage unit which stores at least one of data on the transmitting side received through the communication unit, and position data on the receiving side, and a display unit which displays after the communication unit received the data, a history information of the communication units, and position information according to the position data on the receiving side.

In a radio communication method according to a third aspect of the invention comprises: outputting voice data on receiving voice input through a voice input unit; determining a position and outputting position data through a position determination unit; storing at least the voice data and the position data in a storage unit; transmitting and receiving the voice data and the position data through a communication unit; and displaying position information according to the position data through a display unit.

In a radio communication method according to a fourth aspect of the invention comprises: receiving at least a data on a transmitting side, the data including at least one of voice data through a communication unit; determining a position, when the communication unit received the data, and outputting the position data on the receiving side through a position determination unit; storing the data on the transmitting side received through the communication unit, and position data on the receiving side, through a storage unit; after the communication unit received the data, displaying a history information on the reception, and position information according to the position data on the receiving side, through a display unit.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram of a radio communication terminal apparatus according to the first embodiment of the invention;
FIG. 2 is a flow chart showing a series of processes on a transmission side in a radio communication terminal apparatus according to the second embodiment of the invention; and
FIG. 3 is a flow chart showing a series of processes on a transmission side in a radio communication terminal apparatus according to the third embodiment of the invention.

The preferred embodiments of the invention now will be described with reference to the accompanying drawings.

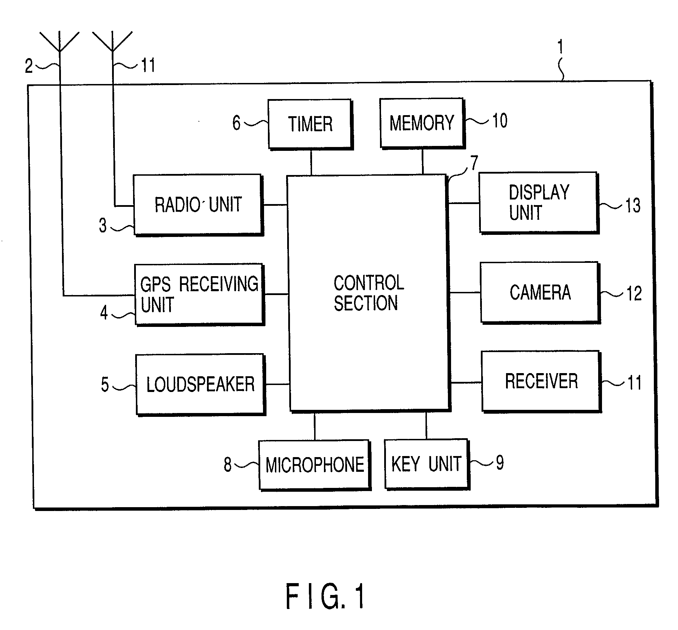

First of all, a radio communication terminal apparatus shown in FIG. 1 according to the first embodiment of the invention will be described. As shown in FIG. 1, the radio communication terminal apparatus comprises a control section 7 to control the entire apparatus.

The control section 7 is connected to a radio unit 3, a GPS receiving unit 4, a loudspeaker 5, a timer 6, a microphone 8 as a voice input section, key unit 9, a memory 10 as a storage section, receiver 11, a camera 12 as an image capture unit, and a display unit 13. The radio unit 3 is connected to an antenna 14. The GPS receiving unit 4 is connected to an antenna 2.

The structure of the radio communication terminal apparatus is characterized by particularly comprising the GPS receiving unit 4 for receiving position data and the camera 12 for capturing the image among the respective units.

The respective constituting units of the apparatus function as follows.

That is, a communication section consisting of the antenna 14 and the radio unit 2 employs various systems such as PDC, PHS, or CDMA, etc. The communication section performs radio communication with a base station, not shown, under such various systems.

The radio unit 2 has a transmitting section which modulates a high frequency signal and then converts the signal into a radio frequency signal, a receiving section which amplifies the radio frequency signal and then demodulates the amplified signal, or the like. For example, in the CDMA system, transmission power control of high speed and high precision, or the like is also used jointly.

A position determination section consisting of the antenna 2 and the GPS receiving unit 4 employs, for example, an expanded GPS system, or the like. The position determination section receives radio waves transmitted from satellites under the expanded GPS system, or performs communication with a base station, not shown, so as to determine the position of a radio communication terminal apparatus 1.

With joint use of the communication with the base station as described above, error information can be eliminated during the communication process, and thus higher precision is realized.

Incidentally, as a position detection system,
a TDOA (time difference of arrival) that performs triangular surveying based on the time difference of signals arriving at the base station, or an AOA (angle of arrival) that determines a position based on arrival angles of received signals of the base station can be also employed.

The key unit 9 includes, for example,
a transmitting key, receiving key, and dial buttons, and further, a button used for inputting various information, a button used for instructing to capture a picture through the camera 12, and the like. The memory 10 stores motion picture data, position data, map data, history data, re-dial data, and the like.

The camera 12 is constituted by, for example,
a CCD, a C-MOS image sensor, or the like. Picture data capture through the camera 12 is transmitted to the control section 7. The transmitted picture data is applied with a predetermined picture processing in the control section 7, and then stored in the memory 10.

The display unit 13 is constituted by a color LCD, or the like. The display unit 13 displays an operation during TV telephone communication, picture data input through the camera 12, received position information, various setting information, and the like.

The control section 7 comprises a CPU that controls the respective units. The control section 7 performs processing of the signal, which is received by the radio unit 3 or the GPS receiving unit 4 and then demodulated, and signal processing of voice data and picture data, both types of data them being transmitted to the other apparatuses. That is, the control section 7 presides over control concerning human interfaces for example, control over display, key input, and the like, in addition to control over the respective units according to a transmit-receive sequence based on a protocol. In regard to the units other than ones above described, the loudspeaker 5 outputs the received voice data etc. externally. The microphone 8 performs voice input. The timer 6 outputs, for example, a fundamental clock signal based on which the control section 7 operates.

Actions provided through the radio communication terminal apparatus according to the above structure now will be described in detail.

Note that the actions are applicable to a radio communication method pertaining to the first embodiment.

Needless to say, the executing order is not limited to the order described below.

During TV telephone communication, in the radio communication terminal apparatus 1 on the transmission side, the picture data captured by the camera 12 is subjected to a picture processing in the control section 7, and voice data is also processed in the control section 7. After that, both types of data are transmitted to a base station through the radio unit 3 and antenna 14. At this time, the position data on the radio communication terminal apparatus 1, which is obtained through the GPS receiving unit 4, is added to the motion picture and the voice data, and then transmitted jointly to the base station, not shown.

The radio communication terminal apparatus 1 on the communication party's side, which has received the above transmitted data from the base station, displays a picture according to the picture data on the display 13. In the case that the position data is transmitted together with the picture data, the radio communication terminal apparatus 1 displays position information while displaying the picture data.

That is, the radio communication terminal apparatus 1 displays the position information by overlapping it on the picture, or displays the position information in the manner of switching the position information from or to the picture freely.

The above-mentioned picture data includes motion picture data and still picture data.

As described above, with the radio communication terminal apparatus according to the first embodiment, it is possible to display, during TV communication, the position information on the apparatus of the communication party in addition to a picture according to the picture data transmitted from the apparatus of the communication party on the display unit.

In this case, as a technique of displaying position information, it is possible to display the position information through an address, through a map, both provided by map information data stored in advance in the terminal or the base station, or the like, as well as the display through latitude. As described, according to the first embodiment, the apparatuses on the transmission side and the receiving side can perform TV telephone communication with each other while confirming the mutual position (place).

Next, the second embodiment of the invention will be described.

The second embodiment is characterized in that picture data to be sent can be transmitted with position data added thereto. In particular, the embodiment is characterized by associating transmission history data with the picture data and the position data and storing the associated data, thereby displaying the same.

Incidentally, the structure of a radio communication terminal apparatus according to the second embodiment is substantially equivalent to one shown in FIG. 1. Therefore, the sections identical to FIG. 1 are described with the identical symbols to FIG. 1.

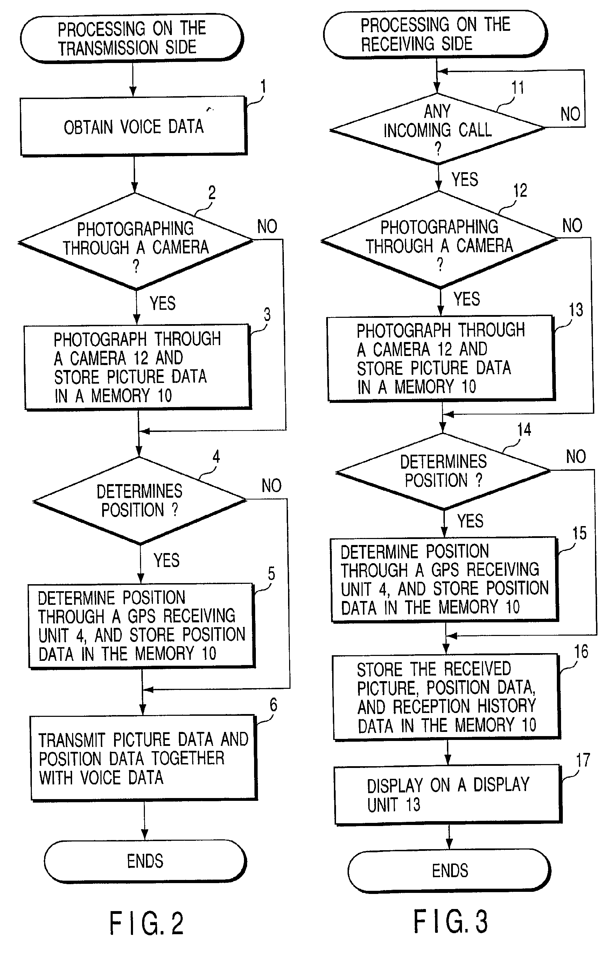

Processes on the transmission side in the radio communication terminal apparatus according to the second embodiment now will be described in detail with reference to a flow chart shown in FIG. 2.

Incidentally, the processes are also applicable to a radio communication method pertaining to the second embodiment. Naturally the executing order of the respective steps is not limited to the order described below.

After inputting a telephone number by operating the key unit 9, a transmission button is pressed down. Then, the state comes into a communication state. When it comes into the communication state, a series of processes on the transmission side, which will be described later, starts.

More specifically, when coming into the process on the transmission side, the voice of a user on the transmission side is input through the microphone 8, first. After being applied with a predetermined processing in the control section 7, a voice signal is temporarily stored in the memory 10 as voice data (Step S1).

Next, it is determined whether or not to photograph through the camera 12 in the control section 7 (Step S2). In the case that it is determined to photograph through the camera 12, it is carried out. The obtained picture data is subjected to a predetermined picture processing, and then stored in the memory 10 (Step S3). On the other hand, in the case that it is determined not to photograph through the camera 12, the procedure proceeds to the step S4. Incidentally, whether or not the photographing through the camera 12 is performed, it is determined depending on whether or not a predetermined mode is set. However, the method is not limited to the above one.

Subsequently, in the control section 7, it is determined whether or not a position determination through the GPS receiving unit 4 is performed (Step S4). In the case that the position determination is to be performed through the GPS receiving unit 4, it is carried out. The obtained position data is subjected to a predetermined processing in the control section 7 and then stored in the memory 10 (Step S5). On the other hand, in the case that it is determined not to perform a position determination through the GPS receiving unit 4, the procedure proceeds to the step S6. Incidentally, whether or not the position determination through the GPS receiving unit 4 is performed, depends on whether or not a predetermined mode is set. However, the method is not limited to the above one.

Then, the picture data and the position data are added to the voice data stored in the aforementioned memory 10 and transmitted (Step S6), thereby the series of processes ends.

Incidentally, the transmitted telephone number, the transmission history data including the transmission time etc., the picture data, and the position data are mutually associated and stored in the memory 10. The stored data can be confirmed through the display on the display 13 whenever it is necessary.

As described above, with the radio communication terminal apparatus according to the second embodiment, it is possible to store the picture data and the position data while being associated with the transmission data including the transmitted telephone number and the transmission time. That is, when confirming the past transmission history, the state at the time of transmission, for example, a picture of the transmission environment, the transmission position, or the like can be clearly confirmed simultaneously. Therefore, the advantages of the apparatus are improved.

Next, the third embodiment of the invention will be described.

The third embodiment is characterized in that it is possible to selectively perform photographing by means of a camera or position determination in the radio communication terminal apparatus on the receiving side in accordance with the reception timing, and further possible to store the picture data and the position data while being associated with the receiving history data and display the same.

Incidentally, the structure of the radio communication terminal apparatus according to the third embodiment is equivalent to one shown in FIG. 1. Therefore, the sections identical to FIG. 1 are described with the identical symbols to FIG. 1.

Processes on the receiving side in the radio communication terminal apparatus according to the third embodiment now will be described in detail with reference to a flow chart shown in FIG. 3.

Incidentally, the processes are applicable to a radio communication method pertaining to the third embodiment. Naturally the executing order of the respective steps is not limited to the order to be described below.

When a receiving signal supplied from a base station, not shown, is detected in the radio communication terminal apparatus 1 on the receiving side (Step S11), the control section 7 determines whether or not to perform photographing through the camera 12 (Step S12). In the case that it is determined to perform the photographing through the camera 12, it is carried out. The obtained picture data is subjected to a predetermined picture processing in the control section 7 and then stored in the memory 10 (Step S 13). On the other hand, in the case that it is determined not to perform the photographing through the camera 12, the procedure proceeds to the step S14. Incidentally, whether or not to perform the photographing through the camera 12, depends on whether or not a predetermined mode is set. However, this technique is not limited to the above one. For example, it is possible to control such that, in the case that the telephone number of the transmission side is registered in an address book, only the photographing is carried out through the camera 12.

Subsequently, the control section 7 determines whether or not to perform the position determination through the GPS receiving unit 4 (Step S14). In the case that it is determined to perform the position determination through the GPS receiving unit 4, so it is carried out. The obtained position data is subjected to a predetermined processing in the control section 7 and then stored in the memory 10 (Step S15). On the other hand, in the case that it is determined not to perform the position determination through the GPS receiving unit 4, the procedure proceeds to the step S16. Incidentally, whether or not to perform the position determination through the GPS receiving unit 4, depends on whether a predetermined mode is set or not. However, this method is not limited to the above one. For example, it is possible to control such that, in the case that the telephone number of the sender is the one registered in an address book, only the position determination through the GPS receiving unit 4 is carried out.

In this manner, the received picture data and the position data are stored in the memory 10 with the both data associated with the receiving history data (Step S16), and displayed on the display 13 (Step S17). Then, the processing on the receiving side ends.

Incidentally, in the step 16, in the case that telephone number notification data of the transmission side is included in a receiving signal supplied from the base station, the telephone number data is stored as a part of the receiving history data. On the contrary, in the case that the telephone number notification data is not included, the receiving signal is stored as an unidentified telephone number.

In addition, in the step S16, the picture data and the position data on the receiving side is stored associated with the receiving history data.

As described above, according to the third embodiment, even in the case that it was not able to respond to an incoming call owing to some reason, for example, the user was away from the apparatus or the like, it is possible to selectively confirm the receiving time, the telephone number of the sender, the picture data and the position data of the transmission side, and the picture data and the position data on the receiving side in the receiving history, as the need arises. Thus, the states on both the transmission and receiving sides at the time of receiving can be confirmed clearly, thereby the advantages are improved.

The embodiments of the invention have been described in the above. However, the invention is not limited to the above embodiments. Various modifications can be made without departing from the subject matter of the present invention. For example, although having been stored in the memory in the mobile information terminal apparatus, the map data may be downloaded from the base station if necessary.

Furthermore, in addition to the employment of a MPEG system for motion picture communication, a system to which a technique such as streaming is applied can be employed.

According to the first, second, and third embodiments, it is possible to provide a radio communication terminal apparatus and a radio communication method, which comprise a function for adding position data to motion picture data to be transmitted or received, storing and displaying the relevant data, and capable of associating the picture data and the position data with history data at the time of transmission and reception, and storing and displaying the relevant associated data during TV telephone communication.

## Claims

1. A radio communication terminal apparatus **characterized by** comprising:
a voice input unit (8) which outputs voice data on receiving voice input;
a position determination unit (2, 4) which determines a position and outputs position data;
a storage unit (10) which stores at least one of the voice data and the position data;
a communication unit (3, 11) which transmits and receives the voice data and the position data, and
a display unit (13) which displays position information according to the position data.

2. The apparatus according to claim 1, **characterized in that** the communication unit (3, 11) receives a picture data, and the display unit displays the position information and a picture according to the picture data.

3. The apparatus according to claim 1, **characterized in that**, after transmission through the communication unit, the display unit (13) displays history information on the transmission and the position information according to the position data.

4. The apparatus according to claim 3, **characterized in that** the history information on the transmission includes at least one of a telephone number of a communication party and information on transmission time.

5. A radio communication terminal apparatus **characterized by** comprising:
a communication unit (3, 11) to receive at least a data on a transmitting side, the data including at least one of voice data and position data;
a position determination unit (2, 4) which determines a position, when the communication unit received the data, and outputs the position data on the receiving side;
a storage unit (10) which stores at least one of data on the transmitting side received through the communication unit, and position data on the receiving side; and
a display unit (13) which displays after the communication unit received the data, a history information of the communication units, and position information according to the position data on the receiving side.

6. The apparatus according to claim 5, **characterized by** further comprising a capture unit which captures a picture at the time of receiving, wherein the display unit displays the history information, the position information, and the picture.

7. The apparatus according to claim 1 or 5, **characterized in that** the display unit (13) displays the position information by means of at least one of latitude, an address according to map information data, and a map.

8. The apparatus according to claim 7, **characterized in that** the map information data is at least one of map information data stored in the storage unit (10) in the apparatus and map information data received from a base station through the communication unit (3, 11).

9. A radio communication method **characterized by** comprising:
outputting voice data on receiving voice input through a voice input unit;
determining a position and outputting position data through a position determination unit;
storing at least the voice data and the position data in a storage unit; transmitting and receiving the voice data and the position data through a communication unit; and
displaying position information according to the position data through a display unit.

10. The method according to claim 9, **characterized in that** the communication unit receives a picture data, and the display unit displays the position information and a picture according to the picture data.

11. The method according to claim 9, **characterized in that** the display unit displays the position information by means of at least one of latitude, an address according to map information data, and a map.

12. The method according to claim 10, **characterized in that** the map information data is at least one of map information data stored in the storage unit in the radio communication terminal apparatus and map information data received from a base station through the communication unit.

13. The method according to claim 9, **characterized in that** after transmission through the communication unit, displaying history information on the relevant transmission and position information according to the position data through the display unit.

14. A radio communication method **characterized by** comprising:
receiving at least a data on a transmitting side, the data including at least one of voice data through a communication unit;
determining a position, when the communication unit received the data, and outputting the position data on the receiving side through a position determination unit;
storing the data on the transmitting side received through the communication unit, and position data on the receiving side, through a storage unit;
after the communication unit received the data, displaying a history information on the reception, and position information according to the position data on the receiving side, through a display unit.

15. The method according to claim 14, **characterized by** further comprising a capture unit which captures a picture at the time of receiving, wherein the display unit displays the history information, the position information, and the picture.

16. The method according to claim 15, **characterized in that** the reception history information includes at least one of a telephone number of a communication party and information on reception time.

17. The method according to claim 9 or 16, **characterized in that** the display unit displays the position information by means of at least one of latitude, an address according to map information data, and a map.
